# EUROPEAN PATENT APPLICATION

(11) **EP 4 756 387 A1**
(43) Date of publication of application: **10.06.2026**
(21) Application number: 24919641.1
(22) Date of filing: 21.06.2024
(51) Int. Cl.: G01F 1/84

(54) **FLOW SENSOR AND CORIOLIS FLOW METER**

(30) Priority: 24.01.2024 CN 202410094553
(71) Applicant: Wemetro Technologies (Jiangsu) Co., Ltd., Yixing, Jiangsu 214200 (CN); Walsn Limited, Canterbury Kent CT2 7FG (GB)
(72) Inventor: WANG, Tao, Langfang, Hebei 065000 (CN); MA, Chunli, Langfang, Hebei 065000 (CN); CHRIS, Rolph, Langfang, Hebei 065000 (CN)
(74) Representative: Porta & Consulenti Associati S.p.A.
(86) International application number: PCT/CN2024/100680
(87) International publication number: WO 2025/156557

(57) **Abstract**

The present invention relates to the technical field of flow measurement, and disclosed are a flow sensor and a Coriolis flowmeter. The flow sensor comprises flow tube families, drivers, and vibration signal detectors. The drivers and the vibration signal detectors are provided on the flow tube families. The flow tube families comprise at least one straight flow tube family and at least one bent flow tube family, and measurement regions of the straight flow tube family and the bent flow tube family are oppositely and independently arranged. Flow tubes in the straight flow tube family are straight flow tubes, and flow tubes in the bent flow tube family are bent flow tubes. Each flow tube family comprises at least two flow tube groups, and, among all of the flow tube groups, at least one group of flow tubes having the same size and geometry are arranged. Two ends of the flow tubes having the same size and geometry are connected by means of node plates. The Coriolis flow meter comprises a flow transmitter and the described flow sensor. According to the present invention, the overall size can be reduced, mounting is convenient, and the characteristics of both bent flow tubes and straight flow tubes can be considered.

## Description

### TECHNICAL FIELD

The present invention relates to the technical field of flow measurement, in particular to a flow sensor and a Coriolis flowmeter.

### BACKGROUND

At present, under large-flow conditions such as loading and unloading trade, the flow requirements are increasing, so it is necessary to design sensors with a large-flow range. However, the overall dimensions of the existing large-flow range sensor are generally large, and there are difficult installation problems. Therefore, it is urgent to solve the problem that the overall dimensions of the sensor are too large, especially the installation length or height of the sensor is large.

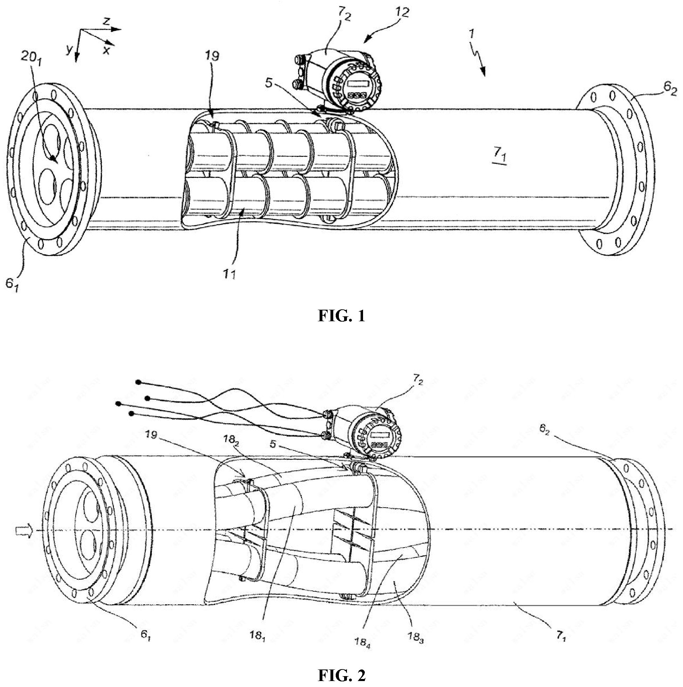

The existing multi-tube Coriolis flowmeter solves the problem that the overall dimensions of the sensor are large to a certain extent. However, as shown in FIG. 1 and FIG. 2, the existing multi-tube Coriolis flowmeter includes either elbow flow tubes only or straight flow tubes only. Although the length of the flow tube can be reduced to a certain extent and an ideal length-to-diameter ratio is adopted, the space cannot be utilized to the utmost extent still, and the characteristics of elbow flow tubes and straight flow tubes can be balanced.

### SUMMARY

The embodiments aim to provide a flow sensor and a Coriolis flowmeter to solve the problems in the prior art. The overall dimensions can be reduced, installation is facilitated, and the characteristics of elbow flow tubes and straight flow tubes can be balanced.

In order to achieve the above-mentioned purpose, the present invention provides the following scheme.

The present invention provides a flow sensor. The flow sensor includes flow tube banks, drivers and vibration signal detectors, and the drivers and the vibration signal detectors being arranged on the flow tube banks. The flow tube banks include at least one straight flow tube bank and at least one elbow flow tube bank, and a measurement zone of the at least one straight flow tube bank and a measurement zone of the at least one elbow flow tube bank are relatively independently arranged. The at least one straight flow tube bank includes straight flow tubes, and the at least one elbow flow tube bank includes elbow flow tubes. Any one of the at least one straight flow tube bank includes at least two flow tube groups, at least one group of flow tubes with same dimensions and geometrical shapes are provided among all the flow tube groups, and both ends of the at least one group of flow tubes with same dimensions and geometrical shapes are respectively connected to each another through gusset plates.

In some embodiments, a difference between a driving frequency of a measurement zone of the straight flow tube bank and a driving frequency of a measurement zone of the elbow flow tube bank is at least 5 Hz.

In some embodiments, a ratio of a length of a measurement zone of any one of the at least one elbow flow tube bank to a diameter of a corresponding elbow flow tube of the elbow flow tubes is larger than 10. A ratio of a length of a measurement zone of any one of the at least one straight flow tube bank to a diameter of a corresponding straight flow tube of the straight flow tubes is larger than 10.

In some embodiments, a diameter of each of the straight flow tubes is smaller than that of each of the elbow flow tubes. The straight flow tubes and the elbow flow tubes have different wall thicknesses.

In some embodiments, multiple gusset plates are arranged along an extension direction of the flow tube bank. A portion between two gusset plates, located on a innermost side, of the multiple gusset plates of each of the flow tube banks constitutes a measurement zone of each of the flow tube banks.

In some embodiments, each of the flow tube groups includes multiple flow tubes, and all the flow tubes of each of the flow tube groups are rigidly connected through fixed plates.

In some embodiments, inlets and outlets of all the flow tubes are connected and fixed through connecting plates.

In some embodiments, inlets of all the flow tubes are connected to one diverter, and outlets of all the flow tubes are connected to another diverter.

In some embodiments, the flow sensor further includes a sensor housing, and the flow tube banks are arranged inside the sensor housing.

The present invention further provides a Coriolis flowmeter, including a flow transmitter and the above-mentioned flow sensor. The flow transmitter is in signal connection with the drivers and the vibration signal detectors in the flow sensor.

Compared with the prior art, the embodiments have the following technical effects.

The flow tube banks in the embodiments include at least one straight flow tube bank and at least one elbow flow tube bank, and a measurement zone of the straight flow tube bank and a measurement zone of the elbow flow tube bank are relatively independently arranged. The straight flow tube and the elbow flow tube are provided at the same time, and the characteristics of the two tube types of flow tubes can be balanced to correct the measurement error and guarantee the measurement accuracy. Moreover, the overall dimensions of the flow sensor can be reduced, and the flow sensor is convenient to install.

### BRIEF DESCRIPTION OF THE DRAWINGS

To more clearly illustrate the present embodiment of the present invention or the technical scheme in the prior art, the following briefly introduces the drawings to be used in the present embodiment. Apparently, the drawings in the following description show merely some embodiments of the present invention, and those skilled in the art can still derive other drawings from these drawings without creative efforts.
FIG. 1 is sample diagram of a Coriolis flowmeter with four straight tubes in the prior art.
   In FIG. 1: 6₁ first flange; 6₂ second flange; 20₁ diverter; 7₁ sensor housing; 19 detection assembly; 5 drive assembly; 11 straight flow tube; 7₂ transmitter housing; 1 sensor; and 12 transmitter.
FIG. 2 is sample diagram of a Coriolis flowmeter with four elbow tubes in the prior art.
   In FIG. 2: 6₁ first flange; 6₂ second flange; 7₁ sensor housing; 19 detection assembly; 5 drive assembly; 18₁ first flow tube; 18₂ second flow tube; 18₃ third flow tube; 18₄ fourth flow tube; and 7₂ transmitter housing.

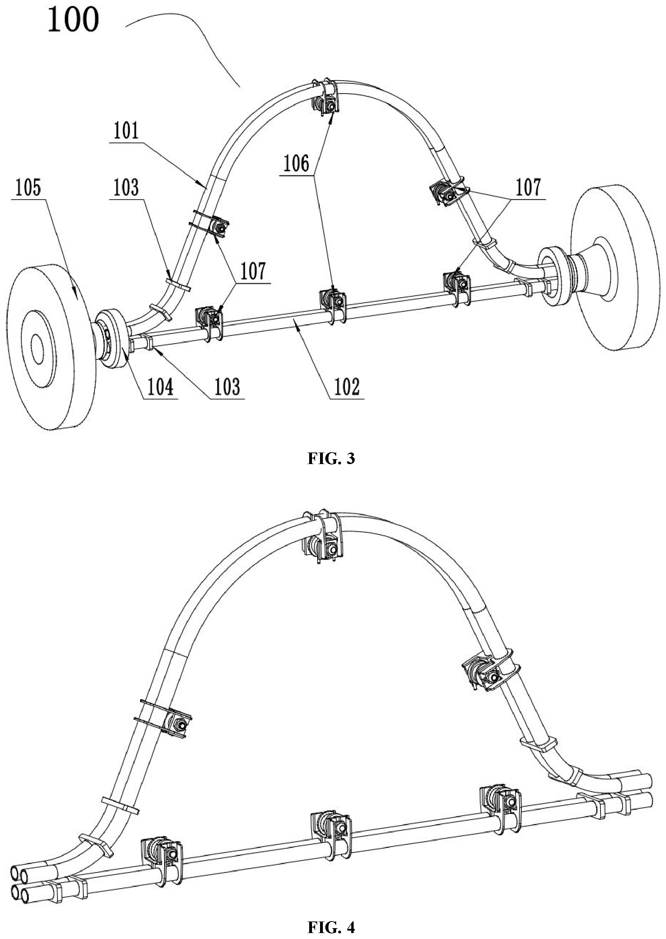

FIG. 3 is a structure diagram of a flow sensor without a sensor housing according to a second embodiment of the present invention.
FIG. 4 is a schematic diagram of FIG. 3 after diverters and connecting flanges are removed.

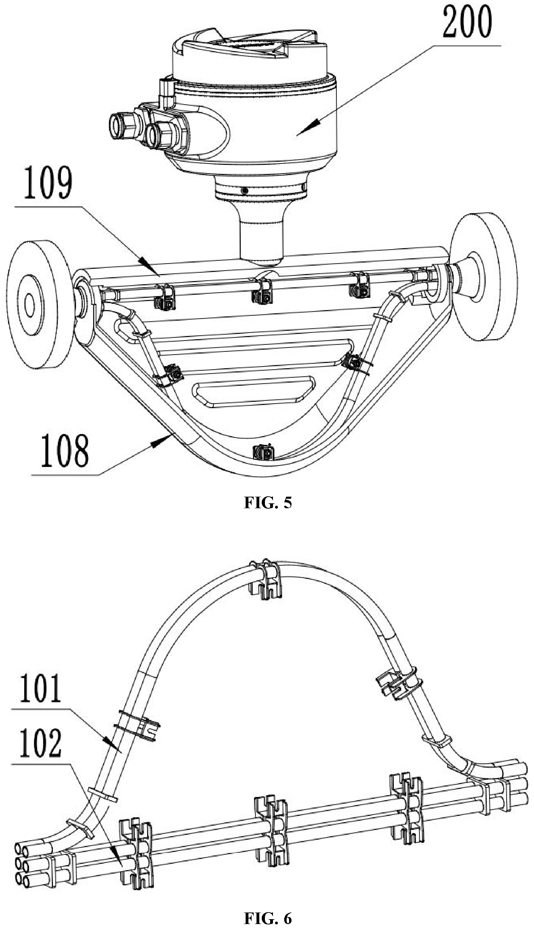

FIG. 5 is an integral schematic diagram of a Coriolis flowmeter according to the second embodiment of the present invention.
FIG. 6 is a composition schematic diagram of a flow tube bank according to a third embodiment of the present invention.

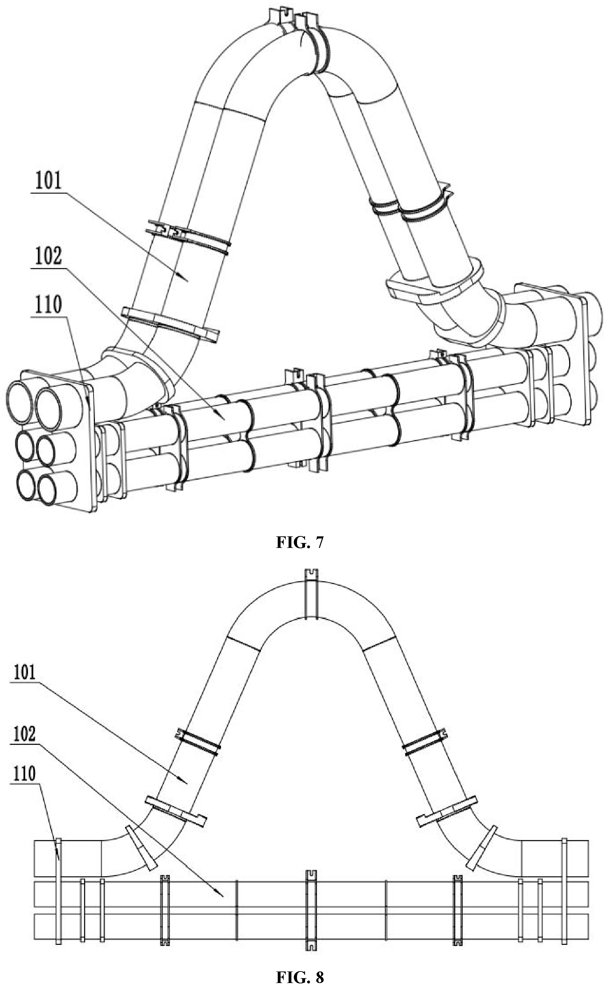

FIG. 7 is a composition schematic diagram of a flow tube bank according to a fourth embodiment of the present invention.
FIG. 8 is a front view of FIG. 7.

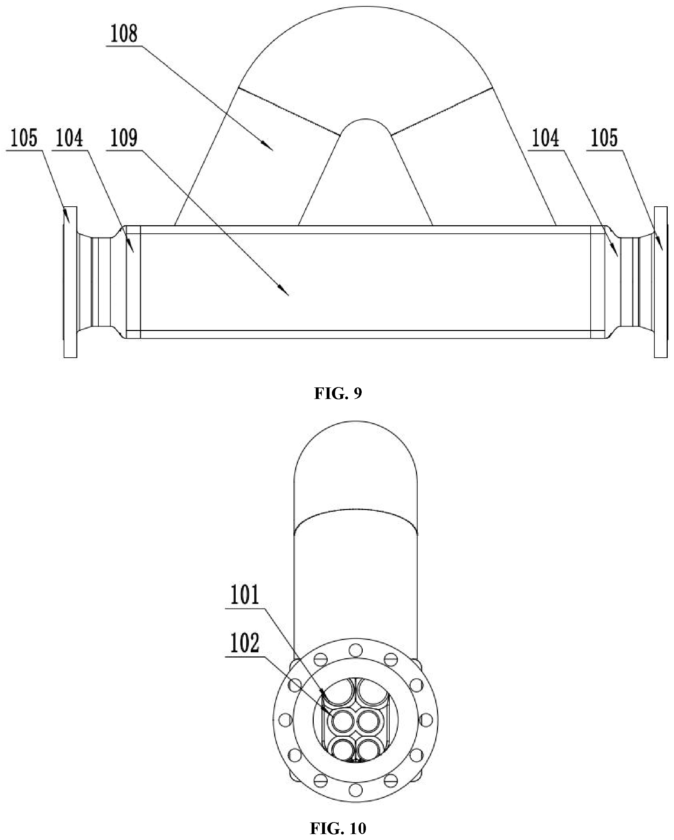

FIG. 9 is a front view of a flow sensor according to the fourth embodiment of the present invention.
FIG. 10 is a side view of a flow sensor according to the fourth embodiment of the present invention.

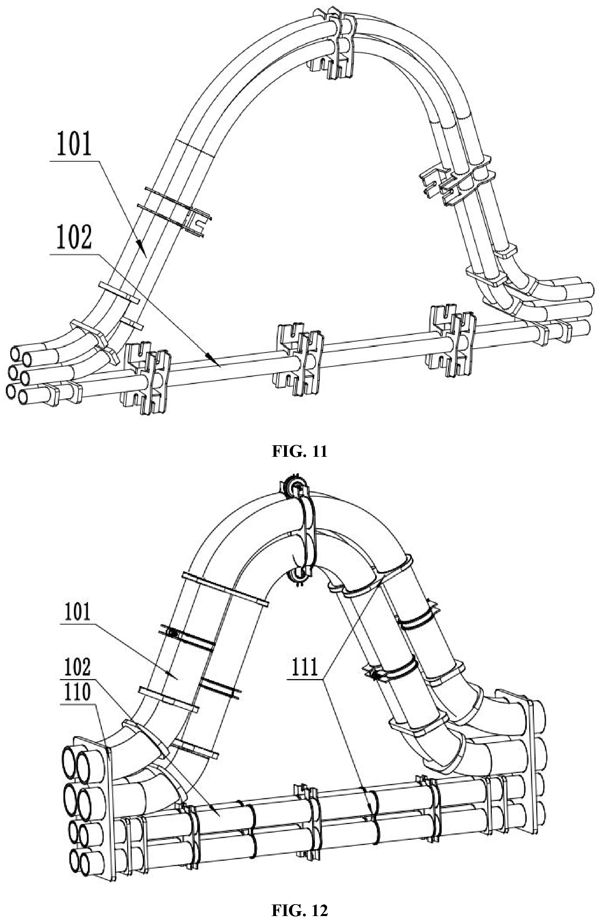

FIG. 11 is a composition schematic diagram of a flow tube bank according to a fifth embodiment of the present invention.
FIG. 12 is a composition schematic diagram of a flow tube bank according to a sixth embodiment of the present invention.

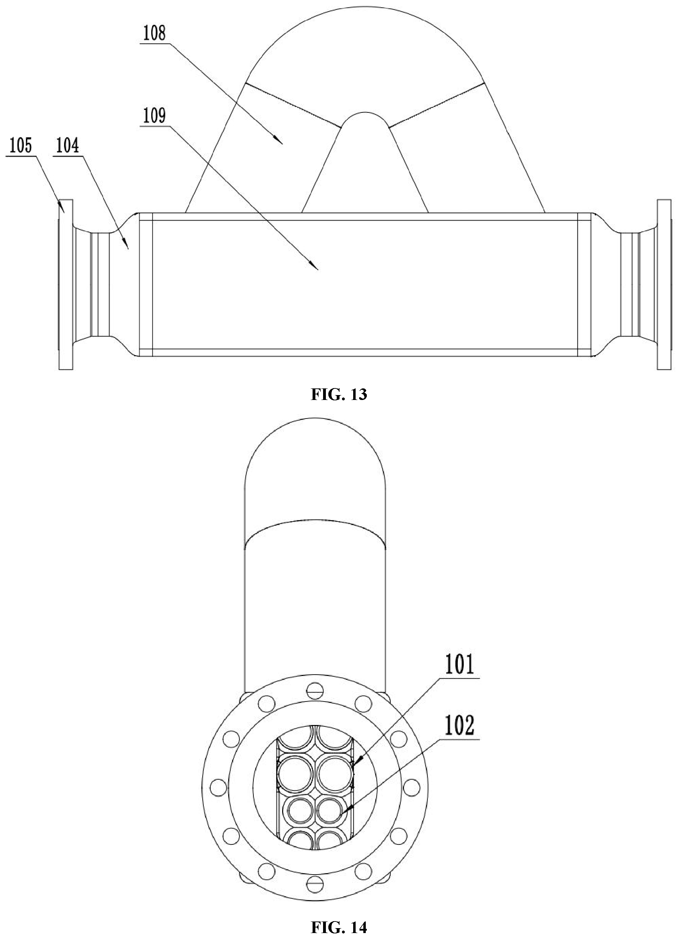

FIG. 13 is a front view of a flow sensor according to the sixth embodiment of the present invention.
FIG. 14 is a side view of a flow sensor according to the sixth embodiment of the present invention.

List of the reference characters: 100 flow sensor; 101 elbow flow tube; 102 straight flow tube; 103 gusset plate; 104 diverter; 105 connecting flange; 106 driver; 107 vibration signal detector; 108 main shell; 109 sleeve; 110 connecting plate; 111 fixed plate; and 200 flow transmitter.

### DETAILED DESCRIPTION OF THE EMBODIMENTS

The following clearly and completely describes the technical scheme in the embodiments of the present invention with reference to the embodiments of the present invention. Apparently, the described embodiments are merely a part rather than all of the embodiments of the present invention. Based on the embodiment in the present invention, all other embodiments acquired by the ordinary technical staff in the art under the premise of without contributing creative labor belong to the scope protected by the present invention.

The embodiments aim to provide a flow sensor and a Coriolis flowmeter to solve the problems in the prior art. The overall dimensions can be reduced, installation is facilitated, and the characteristics of elbow flow tubes and straight flow tubes can be balanced.

To make the foregoing objective, features and advantages of the present invention clearer and more comprehensible, the present invention is further described in detail below with reference to the drawings and specific embodiments.

### Embodiment I

As shown in FIG. 3 to FIG. 14, the embodiment provides a flow sensor 100 suitable for a Coriolis flowmeter. The flow sensor 100 mainly includes flow tube banks. The flow tube banks is provided with drivers 106 and vibration signal detectors 107, where the drivers 106 and the vibration signal detectors 107 are all common parts in the existing Coriolis flowmete, and can be selected according to specific work needs. Unnecessary details are not given in the embodiment.

In the embodiment, the flow tube banks include at least one straight flow tube bank and at least one elbow flow tube bank, and a measurement zone of the straight flow tube bank and a measurement zone of the elbow flow tube bank are relatively independently arranged without any connection. Therefore, the straight flow tube bank and the elbow flow tube bank have independent driving frequencies. Where flow tubes in the straight flow tube bank are straight flow tubes 102, and flow tubes in the elbow flow tube bank are elbow flow tubes 101.

In the embodiment, any one of the straight flow tube banks and any one of the elbow flow tube banks include at least two flow tube groups. Each flow tube group includes at least one flow tube to form a flow sensor 100 with at least four flow tubes. At least one group of flow tubes with same dimensions and geometrical shapes is provided on the same straight flow tube bank or among all the flow tube nests of the same elbow flow tube bank. The number of the group of flow tubes with same dimensions and geometrical shapes is the same as that of the flow tube groups, that is, each flow tube group includes one of the above-mentioned flow tubes, thus forming one group of flow tubes with same dimensions and geometrical shapes. Both ends of the group of flow tubes with same dimensions and geometrical shapes are respectively connected through gusset plates 103, that is, one ends of the flow tubes with same dimensions and geometrical shapes is connected through gusset plates 103, and the other ends of the flow tubes with same dimensions and geometrical shapes are connected through other gusset plates 103.

Further, taking any one of the straight flow tube banks and any one of the elbow flow tube banks including at least two flow tube groups as an example, detailed description is given in the embodiment. At least a pair of flow tubes with same dimensions and geometrical shapes are provided between the two flow tube groups in the same bank (the two flow tubes with same dimensions and geometrical shapes in each pair respectively belong to the two flow tube groups). Measurement of the mass flow and the density of a fluid medium can be realized by using Coriolis principle through relative vibration. Both ends of the pair of flow tubes are respectively connected through gusset plates 103. A measurement zone of the flow tube is defined through the gusset plates 103, that is, the portion, located between the gusset plates 103 at both ends, of the flow tube is the measurement zone.

In the embodiment, the straight flow tube 102 and the elbow flow tube 101 are provided at the same time, and the characteristics of the two tube types of flow tubes can be balanced to correct the measurement error and guarantee the measurement accuracy. Moreover, the overall dimensions of the flow sensor can be reduced, and the flow sensor is convenient to install.

Specifically, the flow sensor 100 in the embodiment is provided with straight flow tubes 102 and elbow flow tubes 101 at the same time. The diameter of the flow tube can be set to be relatively small. Under the same measurement sensitivity, the length of the flow tube does not need to be too long, and a length-to-diameter ratio is relatively easy to control, such that the volume of the flow sensor 100 can be reduced, and the flow sensor 100 is convenient to install. Where, the diameter of the flow tube can be selected according to specific work needs. For example, if the flow sensor 100 is provided with only two flow tubes (one straight flow tube 102 and one elbow flow tube 101), the diameter of the flow tube is about 150 mm at most, and the diameter of the flow tube is smaller than that of a flow sensor provided with only two straight flow tubes or only two elbow flow tubes. If the flow sensor 100 is provided with two straight flow tubes 102 and two elbow flow tubes 101, the diameter of the flow tube can be reduced to about 100 mm, and the diameter of the flow tube is smaller than that of a flow sensor provided with four straight flow tubes independently or four elbow flow tubes independently. Moreover, in the embodiment, since the straight flow tube 102 and the elbow flow tube 101 are combined, and the characteristics of straight flow tubes 102 and elbow flow tubes 101 are balanced. The characteristics can be realized as follows.

Firstly, the measurement results of the straight flow tube bank can be corrected through the measurement results of the elbow flow tube bank.

In the embodiment, the elbow flow tube bank includes elbow flow tubes 101 with a relatively deep bending angle (the bending angle is generally between 50° and 90°, preferably not less than 60°), and the influence on stress can be ignored, but the measurement results of the straight flow tube bank will be affected by stress. The measurement results include the measurement of mass flow and density. Since the elbow flow tube bank and the straight flow tube bank measure the same fluid medium, the measurement results of the straight flow tube bank can be corrected through the difference between a density value without stress correction measured by the straight flow tube bank and a density value measured by the elbow flow tube bank, thus avoiding from arranging additional detectors (such as strain gauges) to sense the stress of the straight flow tube bank.

Secondly, the pressure effects of the elbow flow tube bank and the straight flow tube bank can be canceled out each other.

Under the influence of pressure, if the pressure correction is not carried out, the mass flow measurement of the elbow flow tube bank will have negative error, and the mass flow measurement of the straight flow tube bank will have positive error. By selecting the dimensions and shapes of the straight flow tube 102 and the elbow flow tube 101, the positive error and the negative error of the mass flow measurement can be canceled out to the greatest extent to improve the measurement results.

In the embodiment, the driving frequencies of the measurement zones of the straight flow tube bank and the elbow flow tube bank are different, and the difference is preferably at least 5 Hz to reduce the interaction between the measurement zones of the straight flow tube bank and the elbow flow tube bank.

In the embodiment, in any one of the straight flow tube banks and any one of the elbow flow tube banks, the ratio of the length of the measurement zone of the flow tube to the diameter of the flow tube is preferably greater than 10, further preferably not less than 15. Where, the length of the measurement zone of the elbow flow tube 101 is the total arc length of the measurement zone of the elbow flow tube 101, and the length of the measurement zone of the straight flow tube 102 is the straight length of the measurement zone of the straight flow tube 102.

In the embodiment, the diameters and wall thicknesses of the elbow flow tube 101 and the straight flow tube 102 may be different to achieve optimized measurement sensitivity and length-to-diameter ratio, and the space requirement of the straight flow tube 102 is over the length of the straight flow tube 102 without increasing the height and depth too much, such that the overall space of the flow sensor can be used advantageously. Specifically, the diameter of the straight flow tube 102 is preferably smaller than the diameter of the elbow flow tube 101, and the wall thicknesses of the straight flow tube 102 and the elbow flow tube 101 are different. Since the diameter of the straight flow tube 102 is small, in order to achieve a length-to-diameter ratio similar to that of the elbow flow tube 101, the length of the straight flow tube 102 is also relatively small, thus saving space.

Where, it needs to be noted that the measurement sensitivity of the flow sensor 100 is related to the rigidity of the flow tube, and the smaller the rigidity, the more sensitive the flow sensor 100 is. Under the same diameter, the thinner the wall thickness of the flow tube, the smaller the rigidity is, and the higher the sensitivity of the flow sensor 100 is. Similarly, the larger the length-to-diameter ratio of the flow tube, the smaller the rigidity is, and the higher the sensitivity of the flow sensor 100 is.

As for the selection of the wall thickness of the flow tube, an important selection basis is bearing pressure. For conventional flowmeters (the bearing pressure does not exceed 10 MPa), the ratio of the wall thickness of the flow tube to the diameter of the flow tube needs to be greater than 5%.

In the embodiment, multiple gusset plates 103 are arranged along the extension direction of the flow tube bank, and the portion between the two gusset plates 103, located on the innermost side, of the flow tube is a measurement zone of the flow tube bank. It needs to be noted that along the extension direction of the flow tube, the side adjacent to the middle position of the flow tube is an inner side.

In the embodiment, each of the flow tube groups may include multiple flow tubes, and all of the flow tubes of each of the flow tube groups may be relatively rigidly connected through fixed plate 111, or the flow tubes in the same group may be connected through fixed plates of the drivers 106 or fixed plates of the vibration signal detectors 107.

In the embodiment, all the outlets and inlets of the flow tubes are also connected and fixed through connecting plates 110, such that vibration isolation can be better realized for the flow tubes with large diameters.

In the embodiment, all the inlets of the flow tubes are connected to one diverter 105, such that fluid is diverted into each flow tube, and all the outlets of the flow tubes are connected to another diverter 105, such that the fluid inside all the flow tubes is converged and flows out. Wherein, flow channels inside all the flow tubes are converged at the diverter 105.

In the embodiment, the flow sensor 100 further includes a sensor housing, and the flow tube bank is arranged in the sensor housing. Where, the sensor housing mainly includes a main shell 108 and a sleeve 109. The main shell 108 can protect the elbow flow tube bank, and the sleeve 109 can protect the straight flow tube bank. The main shell 108 and the sleeve 109 can be buckled together to form a closed sensor housing.

The embodiment further provides a Coriolis flowmeter. The Coriolis flowmeter mainly includes a flow transmitter 200 and the above-mentioned flow sensor 100. The flow transmitter 200 and the flow sensor 100 are in signal connection. Specifically, the flow transmitter 200 can provide drive signals to each flow tube bank and process a vibration detection signal of each flow tube bank to realize the measurement of mass flow and density. Where, the flow transmitter 200 and the flow sensor 100 may be integrally installed or separately installed.

### Embodiment II

As shown in FIG. 3 to FIG. 5, two flow tube banks are provided in the embodiment, including one elbow flow tube bank and one straight flow tube bank. The elbow flow tube bank includes two elbow flow tube groups. Each flow tube group only includes one elbow flow tube 101. The straight flow tube bank includes two straight flow tube groups. Each straight flow tube group only includes one straight flow tube 102. All the flow tubes are connected together at the inlets through one diverter 105, and a single inlet flow channel is divided into four flow tube flow channels through the diverter 105. Similarly, all the flow tubes are connected together at the outlets through another diverter 105, and the four flow tube flow channels are converged into a single flow channel.

In the embodiment, the measurement zone of the straight flow tube bank is determined by a first pair of gusset plates 103 on the inner side of the straight flow tube 102, the vibration of the measurement zone is generated by the driver 106 arranged at the middle position of the measurement zone of the straight flow tube 102, and vibration signals are sensed by the vibration signal detectors 107 at both ends of the measurement zone. Accordingly, the measurement zone of the elbow flow tube bank is determined by a first pair of gusset plates 103 on the inner side of the elbow flow tube 101, the vibration of the measurement zone is generated by the driver 106 arranged at the middle position of the measurement zone of the elbow flow tube 101, and vibration signals are sensed by the vibration signal detectors 107 at both ends of the measurement zone. The measurement zone of the elbow flow tube bank and the measurement zone of the straight flow tube bank are relatively independent, and have different working frequencies. In order to reduce the mutual influence, there should be a certain difference between the frequencies of the measurement zones of the two banks, which can be at least 5 Hz.

As shown in FIG. 5, the flow sensor 100 and the flow transmitter 200 together form a Coriolis flowmeter in the embodiment, and the flow sensor 100 and the flow transmitter 200 are preferably integrated. Where, the flow transmitter 200 processes signals from the flow sensor 100, including the detection signals of four vibration signal detectors 107 of two flow tube banks, and also provides drive signals for two drivers 106.

### Embodiment III

As shown in FIG. 6, two flow tube banks are provided in the embodiment, including one elbow flow tube bank and one straight flow tube bank. The elbow flow tube bank includes two elbow flow tube groups. Each flow tube group only includes one elbow flow tube 101. The straight flow tube bank includes four straight flow tube groups. Each straight flow tube group only includes one straight flow tube 102 as well.

### Embodiment IV

As shown in FIG. 7 to FIG. 10, two flow tube banks are provided in the embodiment, including one elbow flow tube bank and one straight flow tube bank. The elbow flow tube bank includes two elbow flow tube groups. Each flow tube group only includes one elbow flow tube 101. The straight flow tube bank includes four straight flow tube groups. Each straight flow tube group only includes one straight flow tube 102 as well.

In the embodiment, the diameter and wall thickness of the elbow flow tube 101 and the diameter and wall thickness of the straight flow tube 102 are different. Specifically, the diameter of the straight flow tube 102 is smaller than that of the elbow flow tube 101, and under the condition that the overall length is constant, the length-to-diameter ratio of the straight flow tube 102 is improved, thereby improving the measurement performance of the straight flow tube bank.

In the embodiment, the outlets of all the flow tubes are connected and fixed through one connecting plate 110, and the inlets of all the flow tubes are connected and fixed through another connecting plate 110, such that a better vibration isolation effect can be achieved.

### Embodiment V

As shown in FIG. 11, two flow tube banks are provided in the embodiment, including one elbow flow tube bank and one straight flow tube bank. The elbow flow tube bank includes four elbow flow tube groups. Each flow tube group only includes one elbow flow tube 101. The straight flow tube bank includes two straight flow tube groups. Each straight flow tube group only includes one straight flow tube 102 as well.

### Embodiment VI

As shown in FIG. 12 to FIG. 14, two flow tube banks are provided in the embodiment, including one elbow flow tube bank and one straight flow tube bank. The elbow flow tube bank includes two elbow flow tube groups. Each flow tube group includes two elbow flow tube 101. The straight flow tube bank includes two straight flow tube groups. Each straight flow tube group includes two straight flow tube 102 as well.

The two flow tubes in the same group can be connected through an independent fixed plate 111, or the coupling of the flow tubes in the same group can be realized through the fixed plate of the driver 106 or the fixed plate of the vibration signal detector 107. As a preferred embodiment, the flow tubes in the same group in the embodiment are jointly connected through the fixed plate 111, the fixed plate of the driver 106, and the fixed plate of the vibration signal detector 107.

In the embodiment, the outlets of all the flow tubes are connected and fixed through one connecting plate 110, and the inlets of all the flow tubes are connected and fixed through another connecting plate 110, such that a better vibration isolation effect can be achieved.

Specific examples are used for illustration of the principles and implementation methods of the present invention. The description of the above-mentioned embodiments is used to help illustrate the method and its core principles of the present invention. In addition, those skilled in the art can make various modifications in terms of specific embodiments and scope of application in accordance with the teachings of the present invention. In summary, the contents of this specification should not be understood as the limitation of the present invention.

## Claims

1. A flow sensor, comprising flow tube banks, drivers and vibration signal detectors, and the drivers and the vibration signal detectors being arranged on the flow tube banks, wherein the flow tube banks comprise at least one straight flow tube bank and at least one elbow flow tube bank, and a measurement zone of the at least one straight flow tube bank and a measurement zone of the at least one elbow flow tube bank are relatively independently arranged; wherein the at least one straight flow tube bank comprises straight flow tubes, and the at least one elbow flow tube bank comprises elbow flow tubes; wherein any one of the at least one straight flow tube bank comprises at least two flow tube groups, at least one group of flow tubes with same dimensions and geometrical shapes are provided among all the flow tube groups, and both ends of the at least one group of flow tubes with same dimensions and geometrical shapes are respectively connected to each another through gusset plates.

2. The flow sensor according to claim 1, wherein a difference between a driving frequency of a measurement zone of the straight flow tube bank and a driving frequency of a measurement zone of the elbow flow tube bank is at least 5 Hz.

3. The flow sensor according to claim 1, wherein a ratio of a length of a measurement zone of any one of the at least one elbow flow tube bank to a diameter of a corresponding elbow flow tube of the elbow flow tubes is larger than 10; and wherein a ratio of a length of a measurement zone of any one of the at least one straight flow tube bank to a diameter of a corresponding straight flow tube of the straight flow tubes is larger than 10.

4. The flow sensor according to any one of claims 1 to 3, wherein a diameter of each of the straight flow tubes is smaller than that of each of the elbow flow tubes, and wherein the straight flow tubes and the elbow flow tubes have different wall thicknesses.

5. The flow sensor according to claim 1, wherein a plurality of gusset plates are arranged along an extension direction of the flow tube banks, and wherein a portion between two gusset plates, located on a innermost side, of the plurality of gusset plates of each of the flow tube banks constitutes a measurement zone of each of the flow tube banks.

6. The flow sensor according to claim 1, wherein each of the flow tube groups comprises a plurality of flow tubes, and all the flow tubes of each of the flow tube groups are rigidly connected through fixed plates.

7. The flow sensor according to claim 1, wherein inlets and outlets of all the flow tubes are connected and fixed through connecting plates.

8. The flow sensor according to claim 1, wherein inlets of all the flow tubes are connected to one diverter, and wherein outlets of all the flow tubes are connected to another diverter.

9. The flow sensor according to claim 1, wherein the flow sensor further comprises a sensor housing, the flow tube banks are arranged inside the sensor housing.

10. A Coriolis flowmeter, comprising a flow transmitter and the flow sensor according to any one of claims 1 to 9, wherein the flow transmitter is in signal connection with the drivers and the vibration signal detectors in the flow sensor.
